# EUROPÄISCHE PATENTSCHRIFT

(11) **EP 1 262 272 B1**
(45) Veröffentlichungstag und Bekanntmachung des Hinweises auf die Patenterteilung: **23.11.2005**
(21) Anmeldenummer: 02002651.4
(22) Anmeldetag: 05.02.2002
(51) Int. Cl.: B23K 31/12, F16L 55/00, B23K 31/02

(54) **Verfahren zum automatischen Protokollieren von Rohrnetz-Verbindungsvorgängen auf Basis von bauteilspezifischen Daten**
Method for automatically establishing joining events based on specific workpiece data
Méthode pour l'établissement automatique de données d'assemblage réalisées sur la base de données spécifiques de pièces

(30) Priorität: 22.05.2001 DE 10124999
(43) Veröffentlichungstag der Anmeldung: 04.12.2002
(73) Patentinhaber: PF Schweisstechnologie GmbH, 36304 Alsfeld (DE)
(72) Erfinder: Spychalski-Merle, Achim, 36304 Alsfeld (DE)
(74) Vertreter: Eisenführ, Speiser & Partner

(56) Entgegenhaltungen:
- EP-A- 0 382 168
- EP-A- 0 816 008
- DE-A- 19 857 344
- US-A- 5 620 625

## Beschreibung

Die vorliegende Erfindung betrifft ein Verfahren zum automatischen Protokollieren der Erstellung von durch Verbinden von Rohrnetz-Bauteilen hergestellten Rohrnetzen gemäß dem Oberbegriff des Anspruchs 1.

In der Gas- und Wasserversorgung sind Rohrnetze aus Rohrnetz-Bauteilen aufgebaut, die zum Beispiel durch Schweißvorgänge miteinander verbunden werden. Neben den eigentlichen Rohren umfassen die Rohrnetz-Bauteile beispielsweise auch T-Stücke, Abgänge bzw. Sättel, Verschlußkappen, Bögen, Reduzierstücke, Übergangsstücke, Flansche usw. Sind die Rohrnetz-Bauteile aus einem thermoplastischen Kunststoff (z.B. Polyethylen) gefertigt, sind die hierbei eingesetzten Verbindungstechniken meistens das Stumpfschweißen oder das Heizwendelschweißen.

Ersteres wird in der Regel für Hauptleitungen oder Ringverteiler eingesetzt, bei denen die Rohre verhältnismäßig große Durchmesser besitzen. Hierbei werden die Verbindungsflächen der miteinander zu verschweißenden Rohrnetz-Bauteile mittels einer Heizplatte erwärmt. Nach einer bestimmten Heizdauer hat sich der thermoplastische Kunststoff an den Verbindungsstellen bis über den Schmelzpunkt erhitzt, so dass das Heizelement entfernt und die Rohrnetz-Bauteile gegebenenfalls unter Druckbeaufschlagung in axialer Richtung zusammengefügt werden können.

Demgegenüber wird das Heizwendelschweißen für Hausanschlüsse, Nebennetze sowie Hauptleitungen bis zu einem Durchmesser von ca. 600 mm eingesetzt. Zur Verbindung zweier Rohrnetz-Bauteile werden diese in ein geeignetes Elektroformteil, wie beispielsweise einer Heizwendelmuffe, einem Heizwendel-T-Stück usw. eingeschoben bzw. wird diesen ein Heizwendel-Sattel aufgesetzt usw. und die Heizwendel mit einer externen Stromquelle verbunden. Hierdurch erhitzt sich die Heizwendel und erwärmt dabei den Kunststoff in ihrem näheren Umgebungsbereich. Nach Erreichen der Kunststoff-Schmelztemperatur fließt der Kunststoff der untereinander zu verbindenden Rohrnetz-Bauteile und des Elektroformteils ineinander und härtet nach Abschalten des Heizwendelstromes zu einer gas-und/oder flüssigkeitsdichten Verbindung aus, wobei das Elektroformteil an Ort und Stelle zurückbleibt.

Es kann nun vorkommen, dass nach der Erstellung des Rohrnetzes einzelne Rohrnetz-Bauteile ausgetauscht werden müssen. Beispielsweise kann dies der Fall sein, wenn es sich herausstellt, dass ein bestimmtes Bauteillos einen Materialfehler aufweist oder dass die Verbindung der Rohrnetz-Bauteile mangelhaft ausgeführt wurde, zum Beispiel wenn die Heizzeit im Falle von Rohrnetz-Bauteilen aus Kunststoff bei einer Reihe von Schweißverbindungen nicht ausreichend war, um eine flüssigkeits- oder gasdichte Verbindung zu erzielen. Ist die genaue Lage der auszutauschenden Rohrnetz-Bauteile oder die mangelhaften Verbindungsstellen in dem Rohrnetz nicht bekannt, bleiben dem Netzbetreiber nur zwei Möglichkeiten: er kann warten, bis eine Undichtigkeit auftritt, was aber mit einem hohen Haftungsrisiko verbunden ist; alternativ kann ein systematischer Austausch aller Rohrnetz-Bauteile oder eine systematische Nachbearbeitung aller Verbindungsstellen erfolgen, was aber wiederum mit hohen Kosten verbunden ist.

Es ist daher für die Netzhersteller und Netzbetreiber prinzipiell notwendig, Kenntnisse über die für das Rohrnetz verwendeten Bauteile sowie insbesondere über deren Lage in dem Netz zu haben. Hierzu werden Rohrnetzpläne sowie Protokolllisten erstellt, die Auskunft über die Lage einzelner Rohrnetz-Bauteile und Verbindungsstellen in einem Netz geben.

Um einen derartigen Plan zu erstellen, werden in der Praxis zwei im wesentlichen unabhängige Handlungen ausgeführt:
Bei der Durchführung beispielsweise eines Schweißvorganges innerhalb eines zu erstellenden Rohrnetzes wird für die Schweißverbindungsstelle eine laufende Nummer vergeben. Diese laufende Nummer wird zusammen mit spezifischen Daten der in diesem Schweißvorgang miteinander zu verbindenden oder bereits miteinander verbundenen Rohrnetz-Bauteile protokolliert. Bei den bauteilspezifischen Daten kann es sich um Informationen über den Typ (Rohr, T-Stück usw.) und den Durchmesser handeln. Je nach eingesetzter Schweißtechnik kommen zu diesen Daten noch weitere bauteilspezifische Daten hinzu.

Im Falle des Heizwendelschweißens für Kunststoffrohre handelt es sich hierbei um Angaben über die Spannung, die Zeit, die Zeitkorrektur in Abhängigkeit der Umgebungstemperatur, die Abkühlzeit, den Widerstand der Heizwendel und der Fertigungs- und Temperaturtoleranz (Temperaturbeiwert) der Heizwendel usw. Bei der Stumpfschweißtechnik handelt es sich um Angaben über das Material, wie beispielsweise die Rohmaterialidentifizierung, die Rohmaterialklassifizierung (MRS) oder die Fließeigenschaften des Materials (MFI), den Durchmesser, die Wanddicke (SDR), den Hersteller, die Chargennummer und den Produktionsort, den Typ usw.

Diese Daten werden zumindest teilweise den Schweißgeräten eingegeben, so dass diese dann daraus die für die Erstellung der Schweißverbindung notwendigen Schweißdaten ableiten bzw. berechnen können. Aus diesen Daten erstellen die Schweißgeräte weiterhin nach Durchführung des Schweißvorganges Protokolle, aus denen zumindest die laufende Nummer für eine Schweißverbindungsstelle und die bauteilspezifischen Daten hervorgehen. Die Eingabe der Daten in ein Schweißgerät kann dabei manuell (die Daten sind dabei codiert (z.B. Barcode) oder im Klartext auf dem Rohrnetz-Bauteil angebracht) oder automatisch im Wege einer Magnetkarte erfolgen.

Würde das Rohrnetz keine Abzweigungen enthalten und streng in eine Richtung aufgebaut werden, so reicht diese Protokollierung aus, um nach Erstellung des Rohrnetzes einen entsprechenden Rohrnetzplan anfertigen zu können. Häufig weisen aber Rohrnetze eine Vielzahl von Abzweigungen und dgl. auf, an denen die weitere Erstellung des Rohrnetzes in nur eine Richtung nicht mehr möglich ist. Darüber hinaus wird bei der Erstellung eines Rohrnetzes häufig "gesprungen", d.h., dass bis zu einer bestimmten Verbindungsstelle gearbeitet und dann an einer anderen Stelle innerhalb des Rohrnetzes fortgefahren wird, um anschließend zu der zuerst genannten Verbindungsstelle zurückzukehren.

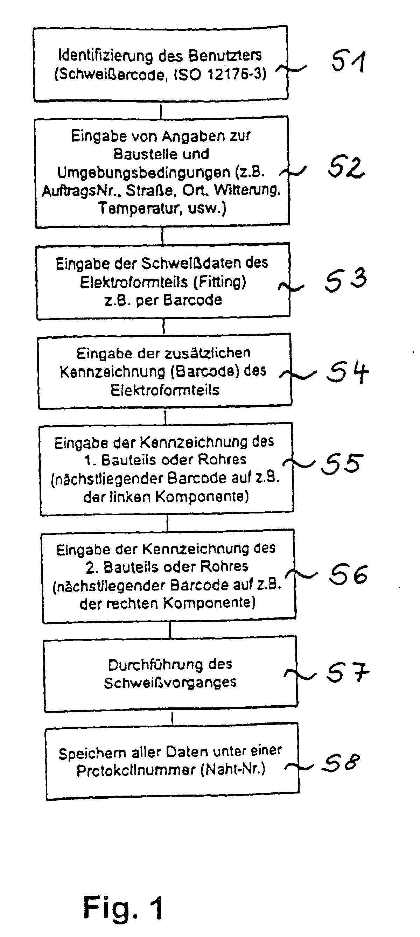

In Fig. 1 ist ein Ablaufdiagramm für die bekannte Protokollierung eines Heizwendelschweißvorgangs wiedergegeben. Im Schritt S1 wird zunächst der Benutzer identifiziert. Anschließend erfolgt im Schritt S2 die Eingabe der Informationen bzgl. der Baustelle sowie der Umgebungsbedingungen (z.B. die Auftragsnr., der Ort, die Witterung, die Temperatur usw.). Daraufhin werden im Schritt S3 die Schweißdaten des Elektroformteils bzw. Heizwendelfittings und im Schritt S4 die Kennzeichnung des Elektroformteils eingegeben, beispielsweise durch Lesen von einem oder mehreren auf dem Teil befindlichen Barcodes. Im Schritt S4 wird die Kennzeichnung des ersten zu verbindenden Rohrnetz-Bauteils, zum Beispiel des sich links von dem Elektroformteil befindlichen Bauteils und im Schritt S5 die Kennzeichnung des zweiten zu verbindenden Rohrnetz-Bauteils eingeben, was wiederum durch Einlesen von Barcodes erfolgen kann. Danach erfolgt im Schritt S6 der Schweißvorgang. Schließlich werden im Schritt S7 die erfassten Daten unter einer Protokollnummer, d.h. einer Nahtnummer abgespeichert.

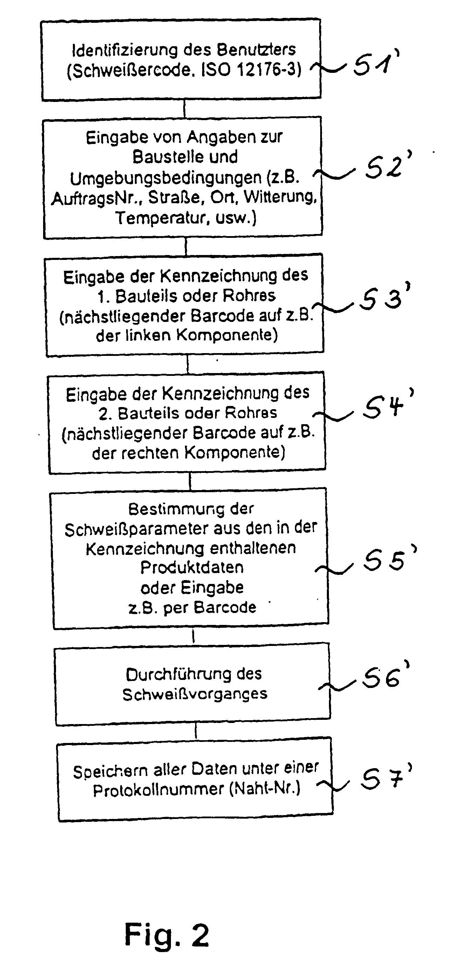

In der Fig. 2 ist ein Ablaufdiagramm für das bekannte Protokollieren eines Heizelement-Stumpfschweißvorgangs gezeigt. Hierbei sind die Schritte S1' bis S4' sowie S6' und S7' mit den Schritten S1, S2 und S5 bis S8 des Ablaufdiagramms in Fig. 1 identisch. In dem Schritt S5'werden aus den in den Schritten S3' und S4' erfassten Daten die Schweißparameter bestimmt.

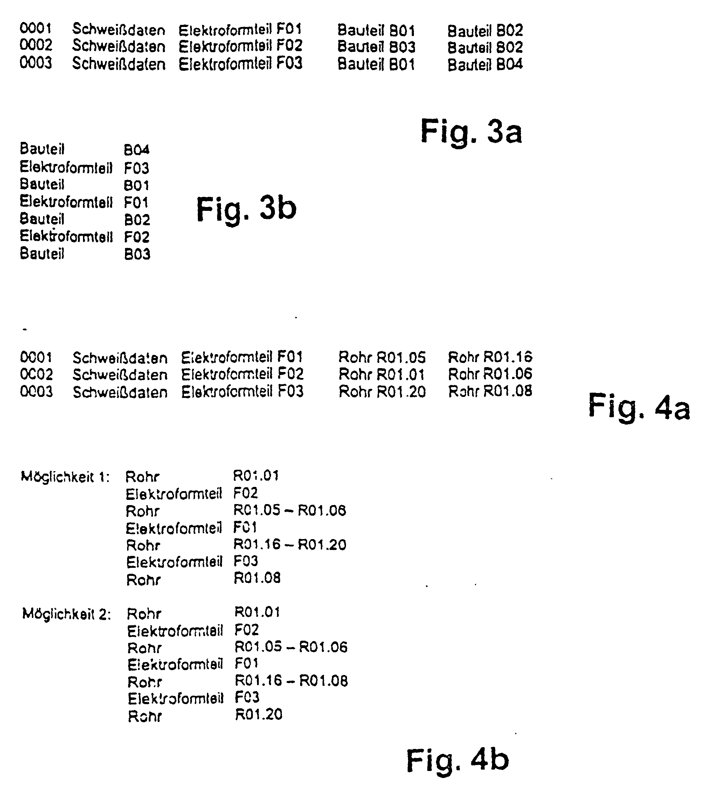

Die Tabelle der Fig. 3a gibt bei einem Heizwendel-Schweißvorgang gemäß dem Ablaufdiagramm der Fig. 1 das Protokoll der chronologischen Reihenfolge der Schweißvorgänge bei der Verarbeitung von eindeutig gekennzeichneten Rohrnetz-Bauteilen, d.h. von Bauteilen, die eine jedes Bauteil gegenüber den anderen Bauteilen eindeutig identifzierende Kennung B01, B02, B03 usw. tragen, wieder. Auf Grund der eindeutigen Kennzeichnung der Bauteile kann dann unmittelbar die Tabelle gemäß Fig. 3b durch Auswerten des Protokolls gemäß Fig. 3a erstellt werden, aus der die strukturelle Reihenfolge der Bauteile in dem Rohrnetz entnehmbar ist.

In der überwiegenden Zahl der Fälle sind aber die Rohrnetz-Bauteile nicht eindeutig kennzeichnet; insbesondere dann, wenn es sich um Meterware in Form von Rohren handelt. Das beispielsweise auf eine Spule aufgewickelte Rohr kann zwar in gleichmäßigen Intervallen eine Längenangabe, z.B. in Meterabständen tragen, jedoch führen diese Angaben noch nicht zu einer eindeutigen Kennzeichnung jedes Rohrnetz-Bauteils, das als Rohrabschnitt oder Rohr von der Rohrspule abgeschnitten wird. In Fig. 4a ist ein Protokoll der chronologischen Reihenfolge der Schweißvorgänge bei der Verarbeitung von mit fortlaufenden Längenangaben versehenen Rohren wiedergeben. Für jeden Schweißvorgang werden eine fortlaufenden Nummer 001 usw., die Schweißdaten sowie die Daten bzgl. dem verwendeten Elektroformteil F01 erfasst und protokolliert. Die weiterhin protokollierten Daten für jedes Rohr, z.B. R01.05 enthalten die Rohrnummer R01 einer aufgewickelten Rohrmeterware und die Meterangabe an der Verbindungsstelle .05. Infolge der nicht eindeutigen Identifizierung der Rohre aus der Rohrmeterware ergeben sich bei der Auswertung der Tabelle in Fig. 4a zwei Möglichkeiten für die strukturelle Reihenfolge der Bauteile im Rohrnetz. Dies ist in Fig. 4b gezeigt.

In diesen Fällen reicht die bloße Protokollierung der einzelnen Vorgänge mit laufender Nummer und spezifischen Daten der Rohrteile nicht mehr aus, da eine eindeutige Lagezuordnung der Rohrnetz-Bauteile zu der jeweiligen Verbindungsstelle nicht vorhanden ist (vgl. Fig. 4b). Deshalb führt die den Verbindungsvorgang ausführende Person eine handschriftliche Skizze, in der für jede Verbindungsstelle die zugehörige fortlaufende Nummer, die vorher für den Verbindungsvorgang vergeben worden ist, eingetragen wird.

Nach Fertigstellung des Rohrnetzes kann dann manuell die Erstellung eines Rohrnetzplanes in der Weise erfolgen, dass die handschriftliche Skizze mit den dort eingetragenen laufenden Nummern für jede Verbindungsstelle mit der vorstehend erwähnten Protokolliste, die ebenfalls die laufenden Nummern der Verbindungsvorgänge und die bauteilspezifischen Daten enthält, zusammengeführt wird.

Weiterhin ist es in der Praxis bekannt, jedem Auftrag (Baustelle, Hausanschluß, Ringleitung) eine bestimmte Verwaltungsnummer (Kommissionsnummer) zu zuweisen. Hierdurch lassen sich die Baustellen voneinander unterscheiden.

Darüber hinaus ist es in der Praxis für die Verbindungsart "Schweißen" bereits bekannt, die für jede Schweißstelle notwendige fortlaufende Nummer automatisch durch das Schweißgerät erstellen zu lassen und der jeweiligen Schweißstelle zuzuordnen.

Es ist ohne weiteres einsichtig, dass die bekannte Vorgehensweise überaus arbeitsintensiv ist. Darüber hinaus können schnell Fehler und damit unzutreffende Rohrnetzpläne mit den entsprechenden Folgen entstehen.

Aus der deutschen Patentanmeldung 198 57 344 geht ein Verfahren der eingangs genannten Art hervor, bei denen für jedes Rohrnetz-Bauteil vor dem Verbindungsvorgang eine eindeutige Bauteil-ldentifikationskennung zum Beispiel in dem Schweißgerät generiert und zusammen mit der fortlaufenden, den Verbindungsvorgang identifizierenden Kennzeichnung abgespeichert wird.

Es ist Aufgabe der vorliegenden Erfindung ein Verfahren der eingangs genannten Art zu schaffen, das auf einfache Weise eine automatische Protokollierung der Verbindungsvorgänge beider Erstellung von Rohrnetzen ermöglichen.

Die vorstehende Aufgabe wird durch die Merkmale des Anspruchs 1 gelöst. Vorteilhafte Ausgestaltungen dieses Verfahrens finden sich in den Unteransprüchen 2 bis 5.

Durch das Erzeugen einer zu dem jeweiligen Rohrnetz-Bauteil eindeutig gehörenden Bauteil-Identifikationskennung aus den bauteilspezifischen Daten der in einem Verbindungsvorgang miteinander zu verbindenden Rohrnetz-Bauteile und dem Abspeichern zusammen mit einer fortlaufenden Kennzeichnung für einen Verbindungsvorgang kann auf einfache Weise aus den vorhandenden Daten ohne Erzeugen neuer Daten eine eindeutige Auswertung der Protokolle erreicht werden. Damit kann dann ohne weiteres ein Rohrnetzplan erstellt werden. In diesem Zusammenhang ist zu bemerken, dass das erfindungsgemäße Verfahren auch dann erfolgreich einsetzbar ist, wenn ein Rohrnetz-Bauteil mit mehr als einem anderen Rohrnetz-Bauteil verbunden wird, wie dies bei einer Abzweigung beispielsweise der Fall ist. Dabei wird die Bauteil-Identifikationskennung eines Rohrnetz-Bauteiles aus den auf dem Rohrnetz-Bauteil fortlaufend vorhandenen Längenangaben sowie einer Produktionskennziffer erzeugt wird, wobei die an den Bauteilenden bzw. Verbindungsenden des Rohrnetz-Bauteils befindlichen Längenangaben erfasst und daraus ein Längenintervall gebildet wird. Hierbei kann zur Gewinnung des Längenintervalls zunächst die der Verbindungsstelle nahe und anschließend die der Verbindungsstelle ferne Längenangabe erfasst werden. Selbstverständlich ist auch eine andere Reihenfolge möglich, wobei aber vorteilhafterweise die Reihenfolge während eines Protokolliervorganges gleich bleiben sollte.

In diesem Zusammenhang ist zu bemerken, dass bei Rohrmeterware, d.h. beispielsweise einem auf eine Spule aufgewickelten Rohr die Produktionsziffer auf einem fortlaufenden Rohrstück dieses Rohres für ein Produktionslos gleich ist.

Um Speicherplatz zu sparen, ist es weiterhin von Vorteil, dass bei einem Verbinden von Rohrnetz-Bauteilen mit zumindest teilweise übereinstimmenden bauteilspezifischen Daten diese übereinstimmenden Daten für die zu verbindenden Rohrnetz-Bauteile nur einmal abgespeichert werden.

Wird an Hand der bauteilspezifischen Daten festgestellt, ob das entsprechende Rohrnetz-Bauteil fortlaufende Längenangaben aufweist, so kann hierdurch auf einfache Weise bestimmt werden, ob es sich bei dem Rohrnetz-Bauteil um ein Rohr oder ein anderes Bauteil handelt. Handelt es sich um ein Bauteil, das bereits eine eindeutige Bauteil-ldentifikationskennung trägt, kann aus Gründen der Datenintegrität das Längenintervall vorzugsweise automatisch auf einen vorbestimmten Wert, vorzugsweise auf Null gesetzt werden.

Um auszuschließen, dass die Längenangaben zweier unterschiedlicher Rohrnetz-Bauteile in einem Längenintervall verknüpft werden, ist es von Vorteil, wenn bei dem Erfassen der Längenangaben an den Verbindungsenden eines Rohrnetz-Bauteils die Identität der Produktionskennziffer überprüft wird.

Wird nach dem Erfassen der ersten Längenangabe an einem Rohrnetz-Bauteil und vor dem Erfassen der weiteren Längenangabe zur Bildung des Längenintervalls festgestellt, dass die erfasste Längenangabe in ein zu diesem Rohrnetz-Bauteil gehörendes und bereits abgespeichertes Längenintervall fällt, so kann hierdurch bestimmt werden, dass das zu verbindende Bauteil ein in ein bereits vorhandenes Rohr einzufügendes Bauteil, beispielsweise ein Sattel ist oder dass das Rohr, dessen Daten erfasst worden sind, abgelängt worden ist oder dass in das betrachtete Rohr ein weiteres Bauteil eingefügt worden ist. Im Falle eines Sattels kann das Lesen einer zweiten Längenangabe entfallen, wogegen bei einem abgelängten Rohr die an dem nunmehr neuen Verbindungsende bzw. Bauteilende vorhandene Längenangabe eingelesen wird. Wird ein neues Bauteil eingefügt, wird das durch das ursprüngliche Längenintervall gekennzeichnete Bauteil in zwei Bauteile mit entsprechend getrennten Längenintervallen überführt.

Weiterhin ist es von Vorteil, wenn bei einer Veränderung der Länge eines Rohrnetz-Bauteils, das in einem vorausgegangenen Verbindungsvorgang mit einem weiteren Rohrnetz-Bauteil verbunden worden ist, die zu dem neu gebildeten Verbindungsende dieses Rohrnetz-Bauteils nahe Längenangabe eingelesen und zur Bildung des Längenintervalls für die eindeutige Kennzeichnung dieses Rohrnetz-Bauteils verwendet wird.

Der sich aus dem erfassten Längenintervall ergebende Längenbetrag eines Rohrnetz-Bauteils kann in einem Display angezeigt, ggf. manuell ergänzt und den Bauteildaten beigefügt werden.

Neben der Bauteil-Identifikationskennung für die Rohrnetz-Bauteile und der den Verbindungsvorgang identifizierenden Kennzeichnung können noch eine der folgenden Dateninformationen in dem Speicher abgelegt werden:
- Typ des Rohrnetz-Bauteils
- die Kommissionsnummer des Auftrags,
- Datum, Uhrzeit, Umgebungstemperatur, Wetter,
- Daten des Verbindungsgerätes, insbesondere Schweißgerätes
- Daten der Bedienungsperson
- Prozeßdaten oder
- Bauteil- bzw. Formteildaten (z.B. Typ, Hersteller, Chargennummer usw.).

Die Gerätedaten werden vom Gerät automatisch in die Protokolle eingefügt.

Die Daten, welche sich auf den Arbeiter bzw. Bediener beziehen, werden in der Regel über einen Barcode oder eine Magnetkarte in das Gerät eingegeben. Neben den Sonderlösungen einiger Gerätehersteller wird von der ISO 12176-3 (Arbeitsdokument N242) ein Codeaufbau standardisiert, der die wesentlichen Daten eines berechtigten Bedieners enthalten soll:
- Personalidentifikation
- Prüfungsdatum
- Land
- Ausgabeorganisation
- Freigabe für verschiedene Verbindungsverfahren, insbesondere Schweißverfahren
- Sprache

Bei der Erstellung eines Rohrnetzes kann es vorkommen, dass ein Übergang zu einem bereits existierenden oder einem sich gerade ebenfalls in der Erstellung befindlichen Rohrnetz vorgesehen werden muß. In diesem Fall kann das hierfür vorgesehene Rohrnetz-Bauteil eine den Übergang kennzeichnende Bauteil-Identifikationskennung erhalten.

Während sich die Prozeßsteuerung im Falle des Stumpfschweißens von Rohrnetz-Bauteilen aus Kunststoff aus den Bauteildaten sowie einem vordefinierten Schweißablauf ergibt, müssen für die Heizwendelschweißung zusätzliche Daten wie Schweißspannung usw. bereitgestellt werden. Diese können z.B. manuell, über Barcode oder Magnetkarte in das Gerät eingegeben werden. Der mittlerweile standardisierte Barcode enthält folgende Daten des Elektro-Formteils:
- Typ
- Durchmesser
- Spannung
- Zeit
- Zeitkorrektur in Abhängigkeit der Umgebungstemperatur
- Abkühlzeit
- Widerstand der Heizwendel
- Fertigungs- und Temperaturtoleranz (Temperaturbeiwert) der Heizwendel

In der Definition des Barcodes werden auch weitere Steuerverfahren (z.B. hinsichtlich des Stromverlaufs, z.B. Konstant- oder Stufenstrom) aufgeführt. Die gängige Methode ist aber die Prozeßsteuerung über eine konstante Spannung. Die Daten über Typ und Durchmesser des Elektroformteils werden lediglich im Protokoll abgelegt, aber nicht für die Steuerung verwendet. Zu den Prozeßdaten kann man auch Informationen über den eigentlichen Schweißvorgang zählen, so z.B. Fehler, Verlaufsprotokolle usw.

Für die Verarbeitung von Rohrnetz-Bauteilen aus Kunststoff mit Hilfe des Stumpfschweißverfahrens sind Geräte bekannt, die aufgrund der Eingabe der Bauteildaten (Material, Durchmesser, Wanddicke (SDR) usw.) den Schweißvorgang automatisch oder halbautomatisch steuern. Diese Daten und auch eventuelle Zusatzdaten (Hersteller, Chargennummer, Typ) werden entsprechend protokolliert. Die Daten sind auf den Rohrnetz-Bauteilen angegeben (eingeprägt, manchmal auch auf Begleitpapieren). Beim Elektroschweißen sind die Daten der Rohrnetz-Bauteile zum Teil im Barcode vorhanden, aber auch auf dem Elektroformteil angebracht, so dass sie von bestimmten Geräten ebenfalls manuell erfaßt werden können.

Im Zuge der ISO Standardisierung (ISO 12176-4 Arbeitsdokument N250) sind auch die Daten der Rohrtnetz-Bauteile als codierte Information (Barcode, Magnetkarte oder Klartext) auf den Rohrnetz-Bauteilen angebracht. Entsprechend werden folgende Daten sowohl für Rohre, wie auch für sonstige Teile und Elektroformteile (Fittings) mindestens zur Verfügung stehen:
- Hersteller
- Typ
- Durchmesser (Größe)
- SDR (Wanddickeninformation)
- Rohmaterialidentifzierung
- Rohmaterialklassifizierung
- Fließeigenschaft des Materials (MFI)

Sofern Daten hinsichtlich der Rohrnetz-Bauteile, wie beispielsweise der Durchmesser, das Material usw. abgespeichert werden, kann vor Durchführung des Verbindungsvorganges, insbesondere eines Schweißvorganges die Zulässigkeit der Verbindung zwischen den Rohrnetz-Bauteilen geprüft werden. Sofern sich hier ein negatives Ergebnis zeigen sollte, wird der Verbindungsvorgang nicht durchgeführt.

Um die Integrität der Datensätze weiter steigern zu können, kann weiterhin vorgesehen sein, dass die Bauteil-ldentifikationskennung eines Rohrnetz-Bauteils die den Verbindungsvorgang identifizierende Kennzeichnung ebenfalls enthält.

Eine weitere Möglichkeit besteht im Einsatz von GPS zur Lageerfassung der Verbindungsstelle.

Nach Erstellung des Rohrnetzes, oder Teilen davon, können die abgespeicherten Daten ausgelesen und in einem Protokoll ausgedruckt werden. Ebenso besteht die Möglichkeit, mittels der abgespeicherten Daten einen Rohrnetzplan z.B. unter Verwendung einer computerunterstützten Software zu erstellen und diesen auszudrucken.

Die Eingabe der bauteilspezifischen Daten kann sowohl von Hand als auch automatisch erfolgen. Im Falle eines automatischen Vorganges kann dies beispielsweise dadurch geschehen, dass eine Einrichtung zum Lesen von maschinenlesbaren Codes vorgesehen ist.

Es ist noch zu bemerken, dass in solchen Fällen, in denen eine eindeutige Bauteil-Identifikationskennung aus den bauteilspezifischen Daten nicht gewonnen werden kann, ein Verfahren sowie eine Vorrichtung eingesetzt werden können, wie sie aus der deutschen Patentanmeldung 198 57 344 des gleichen Erfinders bekannt sind. Insbesondere besteht die Möglichkeit, ein Verfahren sowie ein Gerät zum automatischen Protokollieren der Erstellung eines Rohrnetzes vorzusehen, welche beide Verfahren, d.h. das Verfahren gemäß der deutschen Patentanmeldung 198 57 344 und der vorliegenden Erfindung miteinander vereinen.

Bei dem zu erst genannten Verfahren bzw. Gerät zum automatischen Protokollieren der Erstellung eines Rohrnetzes, das durch Verbinden von Rohrnetz-Bauteilen aufgebaut ist, wird vor einem Verbindungsvorgang bauteilspezifische Daten der miteinander zu verschweißenden Rohrnetz-Bauteile erfasst und in einem Speicher zusammen mit einer fortlaufenden, den jeweiligen Verbindungsvorgang eindeutig identifizierenden Kennzeichnung abgelegt werden. Es ist weiterhin vorgesehen, dass für die in einem Verbindungsvorgang miteinander zu verschweißenden Rohrnetz-Bauteile des Rohrnetzes jeweils eine zu dem jeweiligen Bauteil des Rohrnetzes eindeutig gehörende Bauteil-ldentifikationskennung generiert wird, die zusammen mit der den Verbindungsvorgang identifizierenden Kennzeichnung in dem Speicher abgelegt wird. Durch die Generierung einer einem Bauteil eines Netzes eindeutig zugehörigen Bauteil-ldentifikationskennung, die mit der einen Verbindungsvorgang wiederum eindeutig identifizierenden Kennung (= z.B. laufende Nummer, Schweißnahtnummer) verknüpft wird, besteht auf einfache Weise die Möglichkeit, die Erstellung von Rohrnetzplänen ohne Nachbearbeitung auszuführen. Es bedarf insbesondere nicht der arbeitsintensiven und fehlerträchtigen Erstellung der handschriftlichen Skizze sowie deren Verknüpfung mit den die bauteilspezifischen Daten enthaltenden Verbindungsprotokollen, da letztere bereits mit der dem jeweiligen Bauteil des Rohrnetzes eindeutig zugehörigen Bauteil-Identifikationskennung verknüpft und bei der Durchführung des Verbindungsvorganges, im Vorfeld oder im Nachgang in dem Speicher eines geeigneten Gerätes eingegeben bzw. abgespeichert werden. Diese Eingaben können dann mit den fortlaufenden Nummern für die Kennzeichnung eines Verbindungsvorganges verknüpft werden. Hierdurch ist nun eine eindeutige Lageinformation der Rohrnetz-Bauteile und der Verbindungsstellen vorhanden.

Prinzipiell besteht die Möglichkeit, dass allen Rohrnetz-Bauteilen vor der Durchführung der Verbindungsvorgänge im voraus jeweils eine zu dem jeweiligen Rohrnetz-Bauteil des Rohrnetzes eindeutig gehörende Bauteil-ldentifikationskennung zugewiesen wird. Dies setzt aber voraus, dass sämtliche Rohrnetz-Bauteile bereits bekannt sind. Wo dies noch nicht zutrifft, kann ebenfalls vor der Durchführung eines einzelnen Verbindungsvorganges den für diesen Verbindungsvorgang verwendeten Rohrnetz-Bauteilen jeweils eine zu dem jeweiligen Bauteil des Rohrnetzes eindeutig gehörende Bauteil-ldentifikationskennung zugewiesen werden.

Sind bereits Rohrnetz-Bauteile in dem Rohrnetz verbaut worden, so kann bei einem Verbinden eines bereits in das Rohrnetz integrierten Bauteils dessen bereits zugewiesene Bauteil-Identikationskennung aus dem Speicher aufgerufen werden, ggf. mit der dem neu hinzuzufügenden Rohrnetz-Bauteil zugewiesen Bauteil-Identifikationskennung sowie der den Verbindungsvorgang identifizierenden Kennzeichnung verknüpft und in dem Speicher abgelegt werden. Hierbei kann auch vorgesehen sein, dass dem Benutzer mehrere Bauteil-ldentifikationskennungen verschiedener, eine Weitererstellung des Rohrnetzes ermöglichender Bauteile zur Auswahl oder aber eine zeichnerische Darstellung des Rohrnetzplanes, oder Teilen davon, angeboten wird. Dabei kann auch mittels eines entsprechenden Stiftes die Bauteil-ldentifikationskennung auf dem Rohrnetz-Bauteil notiert werden. Alternativ besteht die Möglichkeit, dass bei einem Verbinden eines bereits in das Rohrnetz integrierten Bauteils dessen bereits zugewiesene Bauteil-ldentifikationskennung gelesen, mit der dem neu hinzuzufügenden Rohrnetz-Bauteil zugewiesenen Bauteil-Identifikationskennung sowie der den Verbindungsvorgang identifizierenden Kennzeichnung verknüpft und in dem Speicher abgelegt werden.

Bereits vorstehend ist darauf hingewiesen worden, dass die Verbindung zweier Rohrnetz-Bauteile durch Schweißen erfolgen kann. Hierauf ist die Erfindung aber nicht beschränkt, da auch andere Verbindungsarten verwendet werden können, beispielsweise eine Verbindung durch Verschrauben von Flanschen an den Rohrenden. Weiterhin ist noch zu bemerken, dass ein Rohrnetz-Bauteil auch mit ein, zwei oder mehreren verschiedenen Verbindungsarten eingesetzt werden kann, beispielsweise ein T-Stück, welches an seinen beiden, in einer Linie liegenden Enden verschweißt und an seinem dritten Ende mittels einer Schraubverbindung an weitere Rohrnetz-Bauteile usw. angeschlossen wird.

Bei der Erstellung eines Rohrnetzes, das durch Verbinden von Rohrnetz-Bauteilen aufgebaut ist, ist die Vorrichtung zum automatischen Protokollieren der Verbindungsvorgänge, die zum Durchführen deszum Durchführen des vorstehend erläuterten Verfahrens einsetzbar ist, mit einer Eingabeeinrichtung zum Eingeben bauteilspezifischer Daten, einer Einrichtung zum Erzeugen einer fortlaufenden, den jeweiligen Verbindungsvorgang eindeutig identifizierenden Kennzeichnung, wenigstens einem Speicher, einer Einrichtung zum automatischen Erzeugen einer einem Rohrnetz-Bauteil eindeutig zugehörigen Bauteil-Identifikationskennung aus den erfassten bauteilspezifischen Daten und der fortlaufenden Kennzeichnung der Verbindungsvorgänge versehen.

Hierbei kann die Eingabeeinrichtung ein Scanner sein. Ebenso kann die Eingabeeinrichtung eine Einrichtung zum Lesen von maschinenlesbaren Codes, insbesondere Barcodes enthält. Weiterhin kann alternativ vorgesehen sein, dass die Eingabeeinrichtung ein Funkscanner ist. Letzteres ist von Vorteil, wenn das Verbindungs- bzw. Schweißgerät nicht oder nur sehr eingeschränkt mobil ist, da die Verbindungs- bzw. Schweißstellen weit voneinander entfernt liegen können.

Darüber hinaus kann eine Einrichtung zum Erfassen und Auswerten von GPS-Signalen vorgesehen sein.

Die Vorrichtung kann Bestandteil einer Heizwendelschweißvorrichtung oder einer Heizelement-Stumpschweißvorrichtung sein.

Hinsichtlich der Vorrichtung ist noch zu bemerken, dass diese innerhalb eines Gerätes zur Erstellung der Verbindung, beispielsweise einem Schweißgerät, integriert sein kann, aber auch ein Begleitgerät sein kann, in das die Daten der Rohrnetz-Bauteile eingegeben werden können und das zur Erzeugen der Bauteil-Identifikationskennungen in der Lage ist. Unabhängig von der vorstehend erwähnten Ausgestaltung sollte aber das Gerät insbesondere ein Display bzw. eine der Anzeigeeinrichtung und eine Tastatur zur Eingabe, ggf. in Verbindung mit einem Barcodeleser aufweisen. Hinsichtlich des Displays ist noch zu bemerken, dass dieses in einer vorteilhaften Ausgestaltung in der Lage sein kann, das bereits erstellte Rohrnetz graphisch, insbesondere unter Verwendung von allgemein verständlichen Symbolen darzustellen.

Weitere vorteilhafte Ausgestaltungen sowie Ausführungsbeispiele des erfindungsgemäßen Verfahrens werden nachstehend anhand der beigefügten Zeichnungsfiguren erläutert. Hierbei ist:
- Figur 1: ein Ablaufdiagramm für einen bekannten Heizwendelschweißvorgang;
- Figur 2: ein Ablaufdiagramm für einen bekannten Heizelement-Stumpfschweißvorgang;
- Figur 3a: ein bekanntes Protokoll der chronologischen Reihenfolge der Schweißvorgänge bei Verarbeitung eindeutig gekennzeichneter Rohrnetz-Bauteile bei einem Heizwendelscheißverfahren gemäß Fig. 1;
- Figur 3b: eine Tabelle der strukturellen Reihenfolge der Rohrnetz-Bauteile nach Auswertung des in Fig. 3a wiedergegebenen Protokolls;
- Figur 4a: ein bekanntes Protokoll der chronologischen Reihenfolge der Schweißvorgänge bei Verarbeitung von nicht eindeutig gekennzeichneten Rohrnetz-Bauteilen bei einem Heizwendelscheißverfahren gemäß Fig.1;
- Figur 4b: Tabellen der strukturellen Reihenfolge der Rohrnetz-Bauteile nach verschiedenen Auswertungsmöglichkeiten des in Fig. 4a wiedergegebenen Protokolls;
- Figur 5: ein Ablaufdiagramm zur Durchführung der erfindungsgemäßen Protokollierung bei einem Heizwendelschweißvorgang;
- Figur 6: ein Flussdiagramm zur Durchführung der erfindungsgemäßen Protokollierung bei einem Heizwendelschweißvorgang;
- Figur 7a: ein Protokoll der chronologischen Reihenfolge der Schweißvorgänge bei Durchführung der Protokollierung gemäß Fig. 5 und 6;
- Figur 7b: eine Tabelle der strukturellen Reihenfolge der Rohrnetz-Bauteile nach Auswertung des in Fig. 7a wiedergegebenen Protokolls;
- Figur 8: ein gegenüber dem Flussdiagramm von Fig. 6 erweitertes Flussdiagramm; und
- Figur 9: ein Blockdiagramm eines Gerätes zum Durchführen das erfindungsgemäßen Verfahrens.

Das im Folgenden beschriebene, erfindungsgemäße Verfahren, das anhand eines aus Rohrnetz-Bauteilen aus Kunststoff aufgebauten Rohrnetzes erläutert wird, wobei die Rohrteile durch Heizwendelschweißen miteinander verbunden werden, soll die Verbindung der einzelnen Rohrnetz-Bauteile schon während der Erstellung des Rohrnetzes so erfassen und in einer Form protokollieren, dass ohne Zuhilfenahme einer nebenbei noch zu führenden, handschriftlichen Skizze die Anfertigung eines Rohrnetzplanes eindeutig möglich ist.

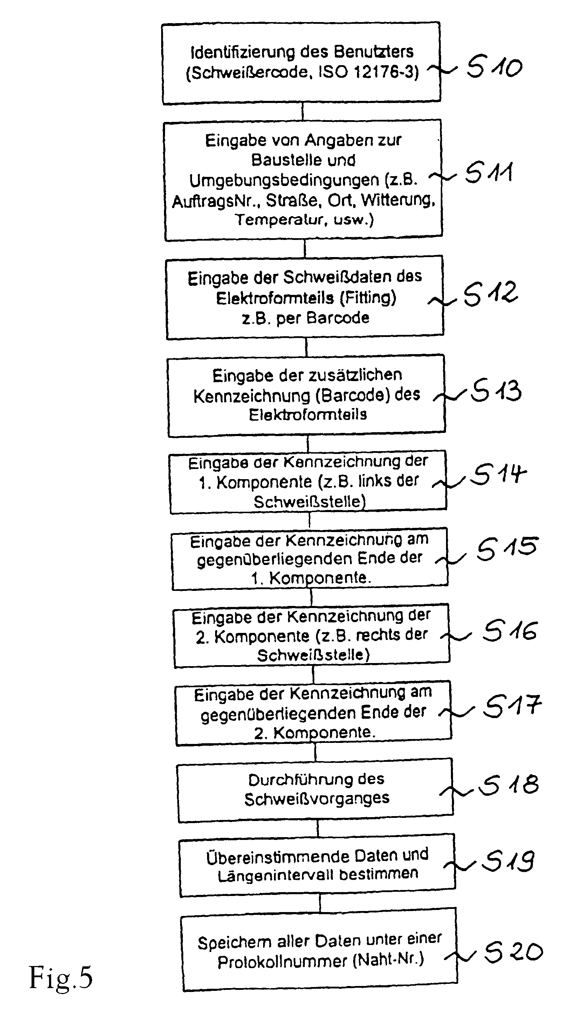

Das in Fig. 5 gezeigte Ablaufdiagramm stimmt in den Schritten S10 bis S13 mit den Schritten S1 bis S4, in dem Schritt S 18 mit dem Schritt S7 und in dem Schritt S20 mit dem Schritt S8 des Ablaufdiagramms gemäß Fig. 1 überein, so dass eine nähere Erläuterung unterbleibt.

Zwischen den Schritten S14 und S16, S16 und S18 sowie S18 und S20 sind gegenüber dem Ablaufdiagramm der Fig. 1 die neuen Schritte S15, S17 und S19 eingefügt. Nachdem im Schritt S14 neben den in Schritt S5 der Fig. 1 bereits erfassten Daten u.a. auch die Längenangabe an dem schweißstellennahen Verbindungsende des ersten Rohrnetz-Bauteils oder Rohres mittels z.B. eines Barcodelesers eingelesen wurde, wird im Schritt S15 die Längenangabe an dem anderen Verbindungsende, d.h. dem schweißstellenfernen Ende eingelesen. Nach dem Einlesen werden diese Daten jeweils abgespeichert.

In den Schritten S16 und S17 erfolgt ebenfalls das Einlesen der Längenangaben an den beiden Verbindungsenden des zweiten Rohrnetz-Bauteils oder Rohres. Hierbei wird wiederum zuerst im Schritt S16 neben den in Schritt S6 der Fig. 1 bereits erfassten Daten die Längenangabe an dem schweißstellennahen Verbindungsende des zweiten Rohres und im Schritt S17 die Längenangabe an dem anderen Verbindungsende, d.h. dem schweißstellenfernen Ende eingelesen. Das Einlesen kann wiederum mittels eines Barcodelesers erfolgen. Nach dem Einlesen werden diese Daten ebenfalls abgespeichert.

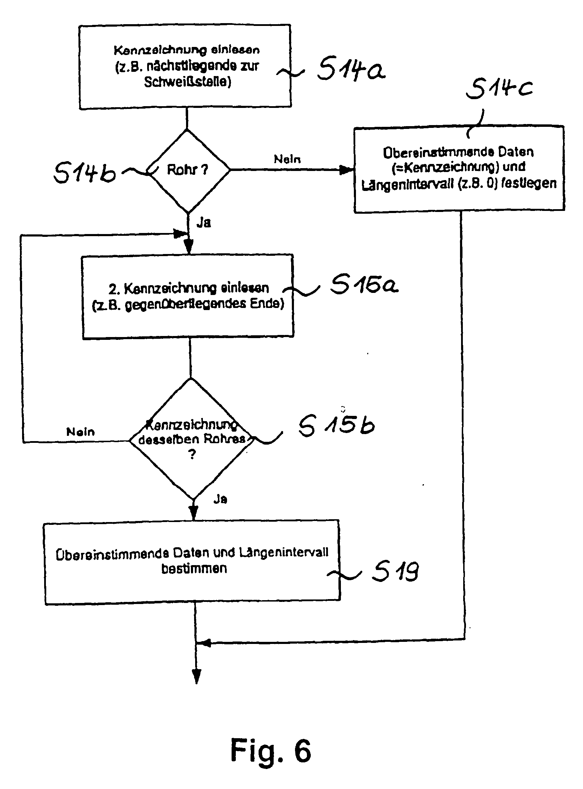

Im Schritt S19 werden aus den für jedes Rohr eingelesenen und abgespeicherten Daten, insbesondere den Längenangaben Längenintervalle gebildet. Diese Längenintervalle werden zusammen mit den für beide Verbindungsenden gemeinsamen oder identischen Daten abgespeichert, wodurch sich die zu speichernde Datenmenge veringern lässt. In diesem Zusammenhang ist zu bemerken, dass der Schritt S19 auch jeweils während oder nach der Durchführung der Schritte S14 und S15 bzw. S16 und S17 ausgeführt werden kann. Letzteres ist in Fig. 6 gezeigt.

Fig. 6 gibt ein Flussdiagramm wieder, in dem der Ablauf der Schritte S14 und S15 bzw. S16 und S17 sowie S19 näher erläutert ist. Im Schritt S14a wird u.a. die Längenangabe an dem schweißstellennahen Verbindungsende bzw. Bauteilende eingelesen. Anschließend wird im Schritt S14b festgestellt, ob es sich bei dem vorliegenden Rohrnetz-Bauteil um ein Rohr handelt. Dies kann einmal durch die erfolgte Eingabe der Daten bzgl. dieses Bauteils oder durch Feststellen des Vorhandenseins einer zweiten Längenangabe an dem anderen Verbindungsende des Bauteils erfolgen.

Wird im Schritt S14b bestimmt, dass es sich um kein Rohr handelt, so wird im Schritt S14c festgetstellt, ob das Bauteil bereits eine eindeutige Kennung besitzt. Ist dies nicht der Fall kann das in der deutschen Patentanmeldung 198 57 344 offenbarte Verfahren des gleichen Erfinders eingesetzt werden. Aus Integritätsgründen wird sowohl bei Vorhandensein einer eindeutigen Kennzeichnung als auch bei Generierung einer gemäß dem Verfahren entsprechend der deutschen Patentanmeldung 198 57 344 eindeutigen Kennzeichnung das Längenintervall auf Null gesetzt. Anschließend fährt das Verfahren mit Schritt S16, der Eingabe der 2. Komponente, oder dem Schritt S20 fort.

Wird im Schritt S14b festgestellt, dass das zu verbindende Rohrnetz-Bauteil ein Rohr ist, wird im Schritt S15a die Längenangabe an dem anderen Verbindunsgende eingelesen. Im Schritt S15b wird überprüft, ob die eingelesene Längenangabe zu dem gleichen Bauteil gehört, dessen erste Längenangabe im Schritt S14a eingelesen wurde. Sofern dies nicht zutrifft wird der Schritt S15a wiederholt, andernfalls zu dem Schritt S19 fortgefahren. Im Schritt S19 wird das Längenintervall gebildet und zusammen mit den für beide Verbindungsenden des Bauteils übereinstimmenden Daten abgespeichert. Anschließend fährt das Verfahren mit dem Schritt S20 fort.

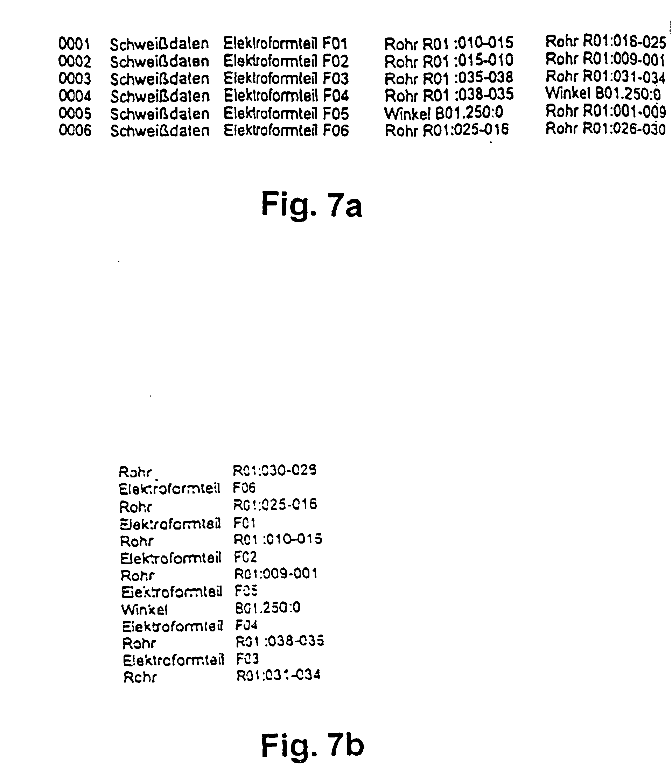

In Fig. 7a ist ein Protokoll der chronologischen Reihenfolge der Schweißvorgänge bei einer Vorgehensweise für ein Heizwendelscheißverfahren gemäß Fig. 5 und 6 wiedergegeben. Wie im Falle der Fig. 4a werden für jeden Schweißvorgang eine fortlaufenden Nummer 001 usw., die Schweißdaten sowie die Daten bzgl. dem verwendeten Elektroformteil F01 erfasst und protokolliert. Im Gegensatz zu dem Protokoll gemäß Fig. 4a wird nunmehr für jedes Rohrnetz-Bauteil oder Rohr nicht nur die Längenangabe an der Verbindungsstelle allein sondern das gesamte Längenintervall für die beiden miteinander zu verbindenden Rohre angegeben. Hierdurch wird jedes Rohr und damit jeder Verbindungsvorgang eindeutig identifiziert, da kein anderes Rohr ein derartiges Längenintervall aufweisen kann. Durch diese eindeutige Identfizierung kann dann durch Auswerten der Tabelle gemäß Fig. 7a die strukturelle Reihenfolge des erstellten Rohrnetzes entsprechend der Tabelle in Fig. 7b erzeugt werden. Im Gegensatz zu der Tabelle in Fig. 4b ist durch die eindeutige Bauteil-Identifikationskennung eine eindeutige Auswertung der Tabelle gemäß Fig. 7b möglich.

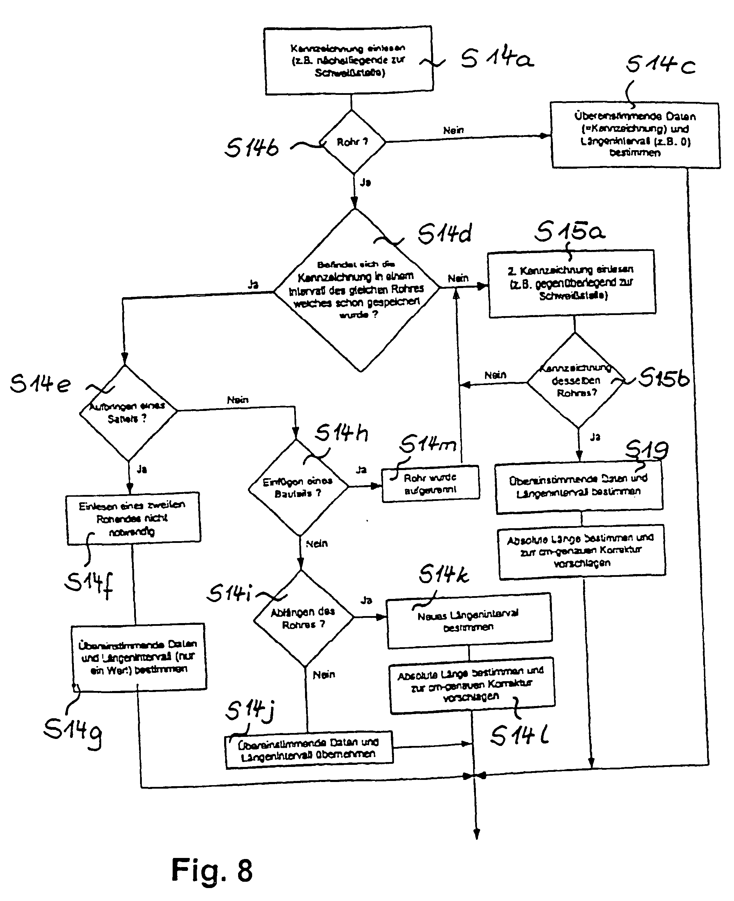

In Fig. 8 ist ein gegenüber der Fig. 6 erweitertes Flussdiagramm wiedergegeben. Hierbei entsprechen die Schritte S14a bis S14c, S15a, S15b und S19 den Schritten S14a bis S14c, S15a, S15b und S19 in Fig. 6, so dass eine weitere Erläuterung unterbleibt. Ebenfalls unterbleibt die Beschreibung für den Fall, dass im Schritt 14b festgestellt wird, dass es sich bei dem betrachteten Rohrnetz-Bauteil nicht um ein Rohr handelt. Hierzu wird auf die Beschreibung der Fig. 6 verwiesen.

Wenn im Schritt S14b in Fig. 8 festgestellt worden ist, dass es sich bei dem betrachteten Rohrnetz-Bauteil um ein Rohr handelt, wird im Schritt S14d überprüft, ob die im Schritt S14a erfasste Längenangabe in ein Längenintervall fällt, dass bereits während eines vorausgegangenen Schweißvorgangs eines Rohrabschnitts der gleichen Rohrmeterware abgespeichert worden ist. Ist dies nicht der Fall wird mit dem Schritt S15a fortgefahren.

Fällt die erfasste Längenangabe in ein bereits für die selbe Rohrmeterware abgespeichertes Intervall wird im Schritt S14e überprüft, ob das andere zu verbindende Rohrnetz-Bauteil ein Sattel ist. Ist dies der Fall, so entfällt ein Einlesen der zweiten Längenangabe, wie dies mit dem Schritt S14f angegeben ist und der Ablauf setzt sich mit einem Schritt S14g fort, der dem Schritt S14c entspricht.

Hieran schließt sich entweder der Schritt S18 oder S20 der Fig. 5 an.

Wird im Schritt S14e bestimmt, dass das andere zu verbindende Rohrnetz-Bauteil kein Sattel ist, wird im Schritt S14h festgestellt, ob ein Bauteil eingefügt wird. Ist dies nicht der Fall wird im Schritt S14i überprüft, ob das betrachtete Rohrnetz-Bauteil oder Rohr abgelängt wurde. Ist dies ebenfalls nicht der Fall, wird mit Schritt S14j fortgefahren, der dem Schritt S14c entspricht. Anschließend wird zum Schritt S18 oder S20 zurückgekehrt.

Wird im Schritt S14i bestimmt, dass das Rohr abgelängt wurde, wird im Schritt S14k die Längenangabe an dem abgelängten, neuen Verbindungsende des Rohres eingelesen und das neue Längenintervall bestimmt. Im Schritt S14l wird die absolute Länge bestimmt und zur cm-genauen Korrektur vorgeschlagen. Hieran schließt sich entweder der Schritt S18 oder S20 der Fig. 5 an.

Wird im Schritt S14h festgestellt, dass ein Bauteil eingefügt worden ist, so wird im schritt S14m bestimmt, dass das betrachtete Rohr aufgetrennt worden ist. Anschließend kann mit den Schritten S15a oder S15b usw. fortgefahren werden.

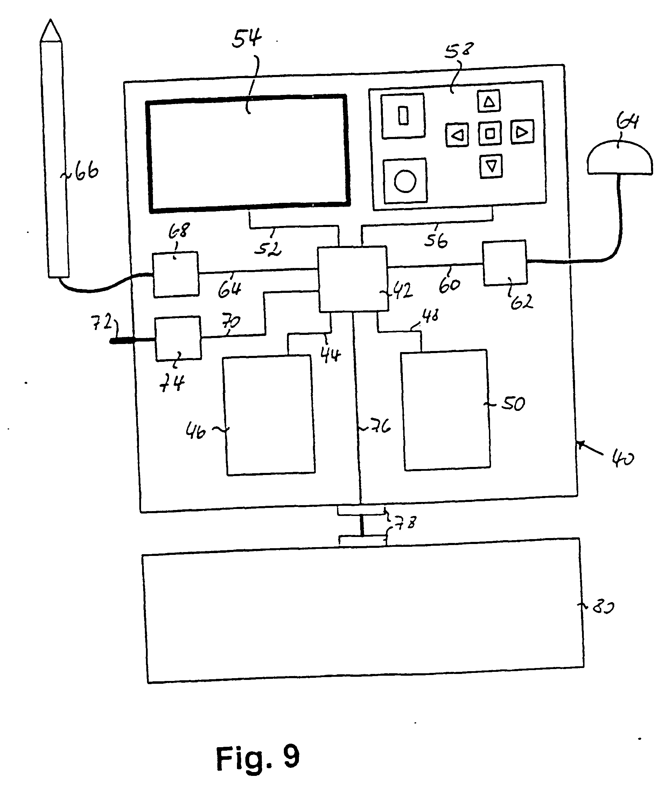

In Figur 9 ist ein Ausführungsbeispiel für eine Vorrichtung 40 zum automatischen Protokollieren der Verbindungsvorgänge bei der Erstellung von Rohrnetzwerken gezeigt, welches zum Durchführen des erfindungsgemaßen Verfahrens eingesetzt wird. Die Vorrichtung 40 kann als integraler Bestandteil eines Verbindungsgerätes, insbesondere eines Schweißgerätes verwendet werden oder kann als unabhängiges, tragbares Gerät eingesetzt werden.

Die Vorrichtung 40 weist eine CPU 42 zum u.a. bestimmen eines Längenintervalls gemäß der Erfindung auf, die über eine Datenleitung 44 mit einem Speicher 46 für das Abspeichern der Tabelle gemäß Fig. 7a verbunden ist, der auch als Protokollspeicher bezeichnet werden kann. In dem Speicher 46 werden u.a. für jeden Schweißvorgang eine fortlaufenden Nummer 001 usw., die Schweißdaten sowie die Daten bzgl. dem verwendeten Elektroformteil F01 erfasst und protokolliert. Weiterhin steht die CPU 42 über eine Datenleitung 48 mit einem Speicher 50 für die Rohrnetz-Bauteil-Datenliste in Verbindung, in dem insbesondere zumindest die durch die CPU 42 bestimmte Längenintervall für ein Rohrnetz-Bauteil zusammen mit anderen bauteilspezifische Daten abgelegt werden und der auch als Rohrnetz-Bauteil-Speicher bezeichnet werden kann. Prinzipiell können die beiden Speicher 46, 50 auch durch einen Speicher oder durch mehr als einen Speicher gebildet sein.

Die CPU 42 ist darüber hinaus über eine Datenleitung 52 mit einem Display 54 verbunden, auf dem alphanumerische und/oder graphische Symbole wiedergebbar sind. Mittels des Displays 54 können die von der Vorrichtung 40 erzeugten Bauteil-Identifikationskennungen, die bereits für ein Bauteil erzeugte ldentifikationskennung, der Inhalt des Protokolspeichers 46, der Inhalt des Rohrnetz-Bauteil-Speichers 50 und ggf. das bereits erstellte Rohrnetz alphanumerisch und/oder graphisch dargestellt werden.

Über eine weitere Datenleitung 56 ist die CPU 42 noch mit einem Tastaturfeld 58 zur manuellen Eingabe und/oder Auswahl der Bauteil-ldentifikationskennungen ausgestattet.

Über eine weitere Datenleitung 60 und über eine Einrichtung 62 zum digitalen Umsetzen von Satelittennavigationsdaten ist die CPU 42 mit einem GPS-Empfänger 64 verbunden.

Über eine Datenleitung 64 ist die CPU 42 mit einem Barcodeleser 66 verbunden, wobei in der Datenleitung 64 eine digitale Umsetzeinrichtung 68 für die vom Barcodeleser 66 gelesenen Daten in digitale Daten vorgesehen ist. Darüber hinaus steht die CPU 42 über eine Datenleitung 70 mit einem Temperatursensor 72 in Verbindung, wobei ebenfalls in der Datenleitung 70 eine Einrichtung 74 zum Umwandeln der von dem Temperatursensor 72 erfaßten Daten in digitale Daten eingeschaltet ist.

Schließlich ist die CPU 42 über eine Datenleitung 76 mit einer Schnittstelle 78 verbunden, über die das Gerät bzw. die Vorrichtung 40 mit einer Regel- und Steuereinheit 80 für den Verbindungsvorgang, insbesondere einem Schweißgerät verbindbar ist. Die Schnittstelle 78 kann sowohl hardwaremäßig als auch softwaremäßig ausgeführt sein. Weiterhin kann sie als Stecker ausgeführt sein, so dass die Vorrichtung 40 an der Regel- und Steuereinheit 80 anschließbar ist.

## Patentansprüche

1. Verfahren zum automatischen Protokollieren der Erstellung eines Rohrnetzes, das durch Verbinden von Rohrnetz-Bauteilen aufgebaut wird, wobei vor einem Verbindungsvorgang bauteilspezifische Daten der miteinander zu verbindenden Rohrnetz-Bauteile erfasst und in einem Speicher zusammen mit einer fortlaufenden, den jeweiligen Verbindungsvorgang eindeutig identifizierenden Kennzeichnung abgelegt werden, wobei aus den bauteilspezifischen Daten der in einem Verbindungsvorgang miteinander zu verbindenden Rohrnetz-Bauteile für jedes Rohrnetz-Bauteil eine zu dem jeweiligen Rohrnetz-Bauteil eindeutig gehörende Bauteil-Identifikationserkennung erzeugt wird, die zusammen mit der den Verbindungsvorgang identifizierenden Kennzeichnung in dem Speicher abgelegt werden,
**dadurch gekennzeichnet, dass** die Bauteil-Identifikationserkennung eines Rohrnetz-Bauteils aus den auf dem Rohrnetz-Bauteil fortlaufenden vorhandenen Längenangaben sowie einer Produktionskennziffer erzeugt
wird, wobei die an den Verbindungsenden des Rohrnetz-Bauteils befindlichen Längenangaben erfasst und daraus ein Längenintervall gebildet wird.

2. Verfahren nach Anspruch 1,
**dadurch gekennzeichnet, dass** zur Gewinnung des Längenintervalls zunächst die der Verbindungsstelle nahe und anschließend die der Verbindungsstelle ferne Längenangabe erfasst wird.

3. Verfahren nach Anspruch 1 oder 2,
**dadurch gekennzeichnet, dass** bei einem Verbinden von Rohrnetz-Bauteilen mit zumindest teilweise übereinstimmenden bauteilspezifischen Daten diese übereinstimmenden Daten für die zu verbindenden Rohrnetz-Bauteile nur einmal abgespeichert werden.

4. Verfahren nach einem der Ansprüche 1 bis 3,
**dadurch gekennzeichnet, dass** bei einem Rohrnetz-Bauteil mit bereits vorhandener eindeutiger Identifikationskennung das Längenintervall auf einen vorbestimmten Wert, vorzugsweise auf Null gesetzt wird.

5. Verfahren nach einem der Ansprüche 1 bis 4,
**dadurch gekennzeichnet, dass** nach dem Erfassen der ersten Längenangabe an einem Rohrnetz-Bauteil und vor dem Erfassen der weiteren Längenangabe zur Bildung des Längenintervalls festgestellt wird, ob die erfasste Längenangabe in ein zu diesem Rohrnetz-Bauteil gehörendes und bereits abgespeichertes Längenintervall fällt.

## Claims

1. Method of automatically recording the establishment of a pipe network which is constructed by connecting pipe network components, wherein before a connecting event component-specific data of the pipe network components to be connected together are detected and stored in a memory together with a serial mark unambiguously identifying the respective connection event, wherein from the component-specific data of the pipe network components to be connected in a connecting event a component identification recognition is generated for each pipe network component which belongs unambiguously to that pipe network component and which is stored in the memory together with the mark identifying the connecting event, **characterised in that** the component identification recognition of a pipe network component is generated from the serial length data available on the pipe network component and a production number, in which case the length data found on the connecting ends of the pipe network component are detected and a length interval is formed therefrom.

2. Method according to claim 1, **characterised in that** in order to obtain the length interval, first the length datum close to the connecting point and then the length datum remote from the connecting point is detected.

3. Method according to claim 1 or 2, **characterised in that** when pipe network components are being connected which have at least partially matching component-specific data, these matching data are only stored once for the pipe network components to be connected.

4. Method according to one of claims 1 to 3, **characterised in that** in the case of a pipe network component already having an unambiguous identification characteristic available, the length interval is set to a predetermined value, preferably zero.

5. Method according to one of claims 1 to 4, **characterised in that** after detection of the first length datum on a pipe network component and before detection of the further length datum in order to form the length interval, it is established whether the detected length datum falls within a length interval belonging to this pipe network component and already stored.

## Revendications

1. Procédé d'établissement automatique de données lors de la construction d'un réseau de tuyauteries, construit par liaison de composants de réseau de tuyauteries, sachant que, avant un processus de liaison, des données, spécifiques aux composants, des composants de réseau de tuyauteries à relier ensemble, sont appréhendées et placées en une mémoire, conjointement avec une caractérisation continue, identifiant de façon univoque le processus de liaison respectif, sachant que, à partir des données, spécifiques aux composants, des composants de réseau de tuyauteries à relier ensemble en un processus de liaison, pour chaque composant de réseau de tuyauteries est générée une caractéristique d'identification de composants, appartenant de façon univoque au composant de réseau de tuyauteries respectif, qui, conjointement avec la caractéristique identifiant le processus de liaison, est déposée dans la mémoire,
**caractérisé en ce que** la caractérisation d'identification de composant d'un composant du réseau de tuyauteries est générée à partir d'indications de longueur, existant en permanence sur le composant de réseau de tuyauteries, ainsi que d'un numéro caractéristique de production, sachant que les indications de longueurs se trouvant aux extrémités de liaison du composant de réseau de tuyauteries sont appréhendées et qu'un intervalle de longueur est formé à partir de cela.

2. Procédé selon la revendication 1,
**caractérisé en ce que**, pour obtenir l'intervalle de longueur, on détecte d'abord l'indication de longueur proche du point de liaison et, ensuite, l'indication de longueur distante du point de liaison.

3. Procédé selon la revendication 1 ou 2,
**caractérisé en ce que**, dans le cas d'une liaison de composants de réseau de tuyauteries, ayant au moins des données spécifiques aux composants qui coïncident au moins partiellement, ces données coïncidant, pour les composants de réseau de tuyauteries à relier, ne sont mémorisées qu'une seule fois.

4. Procédé selon l'une des revendications 1 à 3,
**caractérisé en ce que**, dans le cas d'un composant de réseau de tuyauteries, ayant une caractéristique d'identification univoque déjà existante, l'intervalle de longueur est posé à une longueur prédéterminée, de préférence à zéro.

5. Procédé selon l'une des revendications 1 à 4,
**caractérisé en ce que**, après détection de la première indication de longueur sur un composant de réseau de tuyauteries et avant détection dé l'autre indication de longueur pour former l'intervalle de longueur, on constante si l'indication de longueur appréhendée tombe dans un intervalle de longueurs appartenant à ce composant de réseau de tuyauteries et ayant déjà été mémorisé.
